# EUROPÄISCHE PATENTANMELDUNG

(11) **EP 1 245 320 A1**
(43) Veröffentlichungstag der Anmeldung: **02.10.2002**
(21) Anmeldenummer: 02001736.4
(22) Anmeldetag: 25.01.2002
(51) Int. Cl.: B23D 55/08

(54) **Sägebandführung einer Bandsäge**

(30) Priorität: 29.03.2001 DE 10115615
(71) Anmelder: SMS Meer GmbH, 41069 Mönchengladbach (DE)
(72) Erfinder: Esser, Karl-Josef, 41179 Mönchengladbach (DE)
(74) Vertreter: Valentin, Ekkehard, Dipl.-Ing.

(57) **Zusammenfassung**

Bei einer Sägebandführung einer Bandsäge (2), insbesondere Hochgeschwindigkeitsbandsäge zum Trennen metallischer Produkte, mit dem angetriebenen Sägeband(4) an der schnittaktiven Bandlaufseite flächenseitig zugeordneten Führungsrollen (6a,6b,7a,7b) und dort mindestens einer der rückwärtigen Stirnkante (9) des Sägebandes (4) zugewandten Stützrolle (8), ist die Stützrolle (8) als Kegelstumpfrolle (10) ausgebildet und liegt mit ihrer Kegelfläche (13) an der Stirnkante (9) des Sägebandes (4) an.

## Beschreibung

Die Erfindung betrifft eine Sägebandführung einer Bandsäge, insbesondere Hochgeschwindigkeitsbandsäge zum Trennen metallischer Produkte, mit dem angetriebenen Sägeband an der schnittaktiven Bandlaufseite flächenseitig zugeordneten Führungsrollen und dort mindestens einer der rückwärtigen Stirnkante des Sägebandes zugewandten Stützrolle.

Bei in der Praxis bekannten Bandsägen zum Unterteilen von beispielsweise Aluminiumprofilen in endliche Längen ist es bekannt, eine Abstützung der an den mit hohen Geschwindigkeiten umlaufenden Sägebändern auftretenden Wirkkräfte bzw. Hauptkräfte an den nur einen geringen Querschnitt mit entsprechend kleiner Auflagefläche aufweisenden, von den Sägezähnen abgewandten rückwärtigen Stirnkante des Sägebandes vorzunehmen. Hierzu sind in der Regel im Maschinenrahmen sowohl oben als auch unten an der schnittaktiven Bandlaufseite, d.h. dem Trumm des Sägeblattes, das den Säge- bzw. Trennschnitt durchführt, einerseits Führungsrollen gelagert, die jeweils paarweise einander gegenüberliegend die Flächenseiten des Sägebandes einschließen. Andererseits sind dort komplementäre, mit den Führungsrollen zusammenwirkende Stützrollen gelagert, die der Schnittkraft entgegenwirkend das Sägeband an der rückwärtigen Stirnkante abstützen.

Die eingesetzten Stützrollenanordnungen mit zum Sägeband um 90° versetzt angeordneter Drehachse, wobei auch zwei Stützrollen auf einem gemeinsamen, schwenkbeweglichen Ausgleich-Hebelsystem angeordnet sein können, bieten mit ihrem Rollenmantel somit eine radiale Stützfläche. Der wirksame Rollenradius führt allerdings bei den üblich nicht übermäßig dicken Sägebändern, die z.B. eine Banddicke von 1,5 mm besitzen, zu hohen spezifischen Flächenpressungen mit einem entsprechenden Verschleiß an den Stützrollen.

Eine andere bekannte Ausführung sieht vor, daß eine mit einem Bund ausgebildete Stützrolle mit ihrer Drehachse parallel zum Sägeband angeordnet ist, so daß sich das Sägeband auf dem Kreissegment des Rollenbundes abstützt. Die in diesem Fall drehende Abstützung auf dem Kreissegment geht ebenfalls einher mit einer großen radialen Reibung und damit hervorgerufenem Verschleiß. Bei dieser Anordnung ist außerdem eine sehr genaue Ausrichtung nötig, um nachteilige Kantenträger, d.h. das Aufliegen des Sägebandes auf den Segmentecken oder Kanten zu vermeiden. Allen diesen Ausführungen ist zudem gemeinsam, daß der - außerdem verschleißbedingt häufige - Rollenaustausch zeitaufwendig ist, was vor allem für Bandsägen in automatischen Sägeanlagen nachteilig ist.

Der Erfindung liegt die Aufgabe zugrunde, eine Sägebandführung der eingangs genannten Art ohne die beschriebenen Nachteile zu schaffen, d.h. insbesondere höhere Standzeiten und einen einfacheren Rollenwechsel zu ermöglichen.

Diese Aufgabe wird in verblüffend einfacher Weise dadurch gelöst, daß die Stützrolle als Kegelstumpfrolle ausgebildet ist und mit ihrer Kegelfläche an der Stirnkante des Sägebandes anliegt. Hiermit läßt sich ein auf der Kegelfläche wesentlich größerer wirksamer Radius und damit eine geringere Flächenpressung erreichen. Ansonsten äußerst nachteilige, weil einen höheren Verschleiß bewirkende Kantenträger werden ausgeschlossen. Da hohe Umfangsgeschwindigkeiten vorliegen, wird gleichzeitig die radiale Reibung verringert. Für die Stützrollen ergeben sich wesentlich höhere Standzeiten.

Wenn nach einer bevorzugten Ausführung der Erfindung die Kegelstumpfrolle unter einem kleinen Neigungswinkel zum Sägeband gelagert ist, vorteilhaft mit im übrigen parallel zum Sägeband angeordneter Drehachse in einem Schrägkugellager-System, gegebenenfalls für besonders hohe Drehzahen mit Genauigkeits-Schrägkugellagern, läßt sich der Wirkeingriff hinsichtlich Flächenpressung und Radialreibung weiter optimieren.

Nach einer Ausgestaltung der Erfindung ist die Kegelstumpfrolle über eine von vorne eingesetzte Befestigungsschraube mit der Drehachse verbunden. Dies wird durch die Abflachung der Kegelstumpffläche möglich, so daß ein schneller Austausch mit nur kurzen Stillstandzeiten einer automatisch arbeitenden Anlage erreicht wird, weil die Befestigungsschraube von der Stirnseite der Kegelstumpfrolle frei zugänglich ist.

Weitere Einzelheiten und Vorteile der Erfindung ergeben sich aus den Ansprüchen und der nachfolgenden Beschreibung eines in den Zeichnungen dargestellten Ausführungsbeispiels der Erfindung. Es zeigen:
- Fig. 1: als Einzelheit einer als solche hinlänglich bekannten Bandsäge in der Seitenansicht eine Führungsrollenanordnung mit dieser zugeordneter Stützrolle;
- Fig. 2: die Rollenanordnung nach Fig. 1 von vorne, d.h. von rechts gesehen; und
- Fig. 3: in vergrößerter Darstellung einen Schnitt entlang der Linie III-III von Fig. 2.

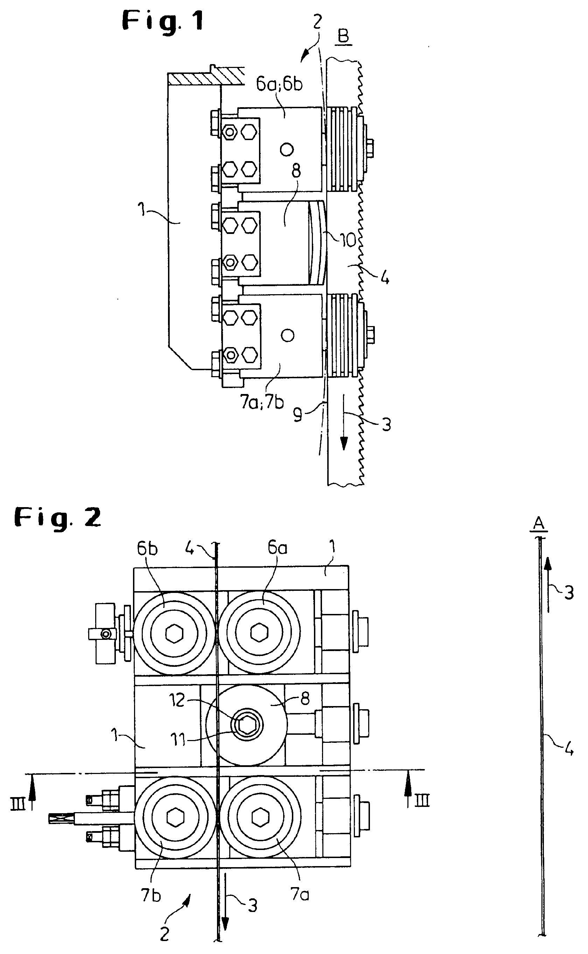

In einem Maschinengehäuse 1 einer im einzelnen nicht weiter gezeigten Bandsäge 2 läuft in Pfeilrichtung 3 ein Sägeband 4 um, z.B. in der Bauweise als Drei-Rollen-Bandsäge in Form eines im wesentlichen gleichschenkligen Dreiecks, bewirkt durch Umlenkung des Sägebandes 4 von einer unten sowie einer oben und einer rückwärtig im Maschinengehäuse angeordneten Rolle. Das Sägeband 4 wird mit seiner schnittaktiven Bandlaufseite (bzw. Trumm) in der temporären Betriebsposition B zum Trennen eines nicht dargestellten Produktes zum Einsatz gebracht, während der in der Umlaufposition A (vgl. Fig. 2) zurücklaufende Bandabschnitt ohne Schneideinsatz bleibt. Dem Sägeband 4 ist zumindest dort, wo sich der schnittaktive Bereich befindet, eine Führungs- und Stützrollenanordnung zugeordnet. Diese besteht im Ausführungsbeispiel aus zwei in Bandlaufrichtung 3 im Abstand aufeinanderfolgenden, d.h. im Maschinengehäuse 1 oben und unten angeordneten Paaren von Führungsrollen 6a, 6b und 7a, 7b (vgl. Fig. 2). Die einander gegenüberliegenden Führungsrollen 6a und 6b bzw. 7a und 7b der Führungsrollenpaare schließen das Sägeband 4 flächenseitig an jeweils dessen äußerer und innerer Oberfläche zwischen sich ein.

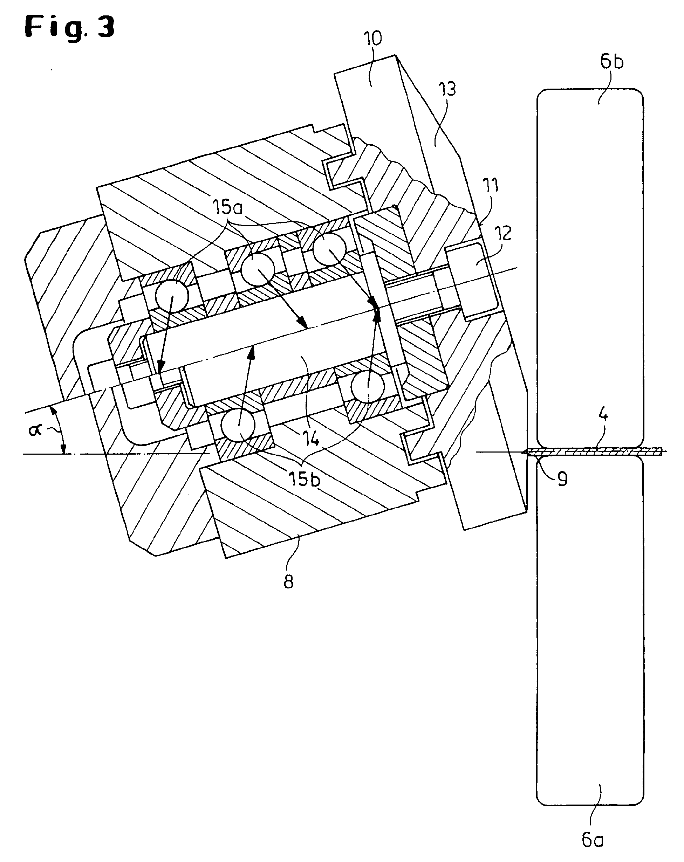

Zur Stützung des Sägebandes 4 und Aufnahme der beim Schnitt auf dieses einwirkenden Kräfte ist im Abstand zwischen den beiden Führungsrollenpaaren 6a, 6b und 7a, 7b in dem Maschinengehäuse 1 weiterhin eine Stützrolle 8 gelagert, die das Sägeband 4 an der rückwärtigen Stirnkante 9 (vgl. die Fig. 1 und 3) abstützt. Der der Stirnkante 9 des Sägebandes 4 anliegende Teil der Stützrolle 8 ist als separate Kegelstumpfscheibe 10 ausgebildet und mittels einer von der flachen Kegelstumpf-Stirnseite 11 her frei zugänglichen Befestigungsschraube 12 (vgl. auch Fig. 2) mit dem Rollenkörper der Stützrolle 8 verbunden.

Die Sägeband-Stirnkante 9 wird somit von der Kegelfläche 13 der Kegelstumpfscheibe 10 mit einem wirksam werdenden großen Radius und damit erreichter geringerer Flächenpressung abgestützt. Damit einher geht ein deutlich geringerer Verschleiß der Stützrolle 8 bzw. der Kegelstumpfscheibe 10. Diese kann gleichwohl einfach und schnell ausgetauscht werden, da hierzu lediglich die zwischen der Umlaufbahn des Sägebandes 4 von vorne frei zugängliche Befestigungsschraube 12 (vgl. Fig. 2) gelöst zu werden braucht.

Die Wirkposition der Stützrolle 8 kann - wie in Fig. 3 gezeigt - dadurch weiter optimiert werden, daß die im übrigen parallel zum Sägeband 4 angeordnete Drehachse 14 unter einem Neigungswinkel α von z.B. 5 bis 15° gelagert ist. Im Ausführungsbeispiel ist hierzu die Drehachse 14 in einer Schrägkugellagerung angeordnet. In Fig. 3 sind der Einfachheit halber zwei Lagervarianten alternativ dargestellt, und zwar in der oberen Zeichnungshälfte eine drei Lager umfassende Schrägkugellagerung 15a sowie in der unteren Zeichnungshälfte eine zwei Lager umfassende Schrägkugellagerung 15b; die Kraftwirkung bzw. die Kraftwirkungslinien sind schematisch durch Pfeile angedeutet. Die jeweilige Lagerausbildung und - anordnung, z.B. Lagerpaare in O- oder X-Anordnung, richtet sich nach der zu erfüllenden Aufgabe und den aufzunehmenden Kräften mit dem Ziel einer möglichst hohen Lagerlebensdauer.

## Patentansprüche

1. Sägebandführung einer Bandsäge, insbesondere Hochgeschwindigkeitsbandsäge zum Trennen metallischer Produkte, mit dem angetriebenen Sägeband an der schnittaktiven Bandlaufseite flächenseitig zugeordneten Führungsrollen und dort mindestens einer der rückwärtigen Stirnkante des Sägebandes zugewandten Stützrolle,
**dadurch gekennzeichnet,**
**daß** die Stützrolle (8) als Kegelstumpfrolle (10) ausgebildet ist und mit ihrer Kegelfläche (13) an der Stirnkante (9) des Sägebandes (4) anliegt.

2. Sägebandführung nach Anspruch 1,
**dadurch gekennzeichnet,**
**daß** die Kegelstumpfrolle (10) unter einem kleinen Neigungswinkel (α) zum Sägeband (4) gelagert ist.

3. Sägebandführung nach Anspruch 2,
**dadurch gekennzeichnet,**
**daß** die parallel zum Sägeband (4) angeordnete Drehachse (14) der Kegelstumpfrolle (10) in einem Schrägkugellager-System (15a; 15b) angeordnet ist.

4. Sägebandführung nach einem der Ansprüche 1 bis 3,
**dadurch gekennzeichnet,**
**daß** die Kegelstumpfrolle (10) über eine von vorne eingesetzte Befestigungsschraube (12) mit der Drehachse (14) verbunden ist.
